(19) Europäisches Patentamt
European Patent Office
Office européen des brevets

(11) **EP 4 016 143 B1**

(12) **EUROPÄISCHE PATENTSCHRIFT**

(45) Veröffentlichungstag und Bekanntmachung des Hinweises auf die Patenterteilung:
**02.10.2024  Patentblatt 2024/40**

(21) Anmeldenummer: **22000025.1**

(22) Anmeldetag: **11.08.2021**

(51) Internationale Patentklassifikation (IPC):
**B42D 25/324** *(2014.01)*   **B42D 25/425** *(2014.01)*
**G07D 7/00** *(2016.01)*   **G07D 7/005** *(2016.01)*
**B42D 25/328** *(2014.01)*   **G02B 5/18** *(2006.01)*
**G02B 5/124** *(2006.01)*

(52) Gemeinsame Patentklassifikation (CPC):
**G02B 5/124; B42D 25/324; B42D 25/328;
B42D 25/425; G02B 5/1861; G07D 7/003;
G07D 7/005**

(54) **VERFAHREN ZUR AUSRICHTUNG EINES RETROREFLEKTIERENDEN ELEMENTS MIT EINEM SICHERHEITSELEMENT**

METHOD FOR ALIGNING A RETROREFLECTING ELEMENT WITH A SECURITY ELEMENT

PROCÉDÉ D'ALIGNEMENT D'UN ÉLÉMENT RÉTRORÉFLÉCHISSANT DOTÉ D'UN ÉLÉMENT DE SÉCURITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.08.2020   DE 102020004967**

(43) Veröffentlichungstag der Anmeldung:
**22.06.2022   Patentblatt 2022/25**

(62) Dokumentnummer(n) der früheren Anmeldung(en) nach Art. 76 EPÜ:
**21000227.5 / 3 958 025**

(73) Patentinhaber: **Gubela, Hans-Erich**
**77876 Kappelrodek (DE)**

(72) Erfinder: **Gubela, Hans-Erich**
**77876 Kappelrodek (DE)**

(74) Vertreter: **Jooß, Achim**
**IMOS Gubela GmbH**
**Kniebisstraße 1**
**77871 Renchen (DE)**

(56) Entgegenhaltungen:
**EP-A1- 3 598 186       WO-A1-2020/074746**
**DE-A1- 102005 061 749**

## Beschreibung

Durch die immer weiter fortschreitende Miniaturisierung im Bereich der Retroreflektoren insbesondere in den Bereichen Displays und Folien und die daraus resultierende schwierigere Fertigung der miniaturisierten Strukturen, insbesondere von Full-Cube-Strukturen, besteht der Wunsch, diese Strukturen vor Nachahmung zu schützen. Gleichzeitig besteht der Wunsch, dass durch eine Markierung zum Nachahmungsschutz möglichst wenig Reflektionsleistung verloren geht.

Unter dem Begriff "Retroreflektor" werden optische Elemente verstanden werden, die in einem bestimmten Winkelbereich einfallendes Licht unabhängig vom exakten Einfallswinkel wieder zum großen Teil zurück zur Lichtquelle zurücklenken. Gewisse Abweichungen des zurückreflektierten Strahles von der Einfallsrichtung sind dabei möglich und teilweise sogar erwünscht, wenn zum Beispiel Lichtquelle und intendierter Rezipient der reflektierten Strahlung nicht in einer exakten Flucht vom Reflektor aus betrachtet sind.

Sehr häufig sind Anwendungen, bei denen der Retroreflektor aus einer Anordnung mehrerer Tripel mit jeweils im Wesentlichen senkrecht aufeinander stehenden reflektierenden Seitenflächen besteht, von denen jede Seitenfläche eine Komponente des Richtungsvektors umdreht. In vielen Anwendungen bestehen die Tripel aus Tetraederstrukturen (zum Beispiel US3810804 A Anmelder: Rowland dev. Corp), d.h. aus halben Würfeln, die entlang einer Diagonalen abgeschnitten sind. Solche Pyramidenstrukturen haben den Nachteil, dass sie aufgrund von Totflächen, d.h. Flächen, deren reflektierte Strahlen nicht weiter reflektiert werden können, einen maximalen Wirkungsgrad von nur ca. 66 % haben.

Sehr häufig sind auch Anordnungen, bei der die drei Seitenflächen eines Tripels im Wesentlichen quadratisch und von gleicher Größe sind. Sie bilden dann eine Ecke (also drei in einem Punkt zusammenstoßende Flächen) eines Würfels. In der Projektion auf eine Lichteintrittsfläche ergibt sich bei dieser Struktur ein regelmäßiges Sechseck. Ein solcher spezieller Tripel soll hier als Full-Cube bezeichnet werden. Im Folgenden wird von Full-Cube-Strukturen ausgegangen. Die Erfindung kann ohne Beschränkung der Allgemeinheit aber auch bei Retroreflektoren mit Pyramidenstrukturen oder bei Retroreflektoren, bei denen die Projektion auf die Lichteintrittsfläche ein Rechteck ergibt, wie z.B. in der DE 4 236 779 A1 (Anmelder: Hans- Erich Gubela sen.) beschrieben, sowie bei allen anderen Tripelstrukturen mit drei nahezu senkrecht stehenden Seitenflächen angewendet werden.

Von der IMOS Gubela GmbH ist seit langem ein mit einem Hologramm in einer Ecke gekennzeichneter Retroreflektor auf dem Markt erhältlich. Hierbei ist das Hologramm jedoch sofort sichtbar, wenn der Retroreflektor unter kleinem Anleuchtwinkel beleuchtet wird. Auch die Strukturen, die in der DE 10 2018 112 043 A1 (Anmelderin: Imos Gubela GmbH offenbart werden, zeigen das Problem, dass sie sofort sichtbar sind, wenn sie unter kleinem Anleuchtwinkel offenbart werden.

In der DE 103 12 708 B4 (Inhaberin: OVD Kinegram AG Anmeldetag: 21.3.2003) ist ein Retroreflektor aus einem Kunststoffschichtverbund mit einer reliefartigen Mattstruktur offenbart, die eine Polarisationsrichtung des reflektierten Lichts verändert jedoch keine Beugungseffekte für sichtbares Licht zeigt.

In der wissenschaftlichen Literatur ("Color-selective holographic retroreflector array for sensing applications" Autoren: Rajib Ahmed, Ali K Yetisen, Seok Hyun Yun und Haider Butt veröffentlicht in Light: Science & Applications (2017) 6 preview online 5 September 2016) wird ein holographisches Abbild eines Würfeleckenreflektors diskutiert, das die gleichen Phaseneigenschaften wie ein normaler Würfeleckenreflektor aufweist, allerdings selbst keine retroreflektierenden Eigenschaften hat. In den Druckschriften DE 10 2012 105 571 A1 (Anmelderin: OVD Kinegram AG) und DE 10 2009 012 300 A1 (Anmelderin: Giesecke und Devrient GmbH) wird beschrieben, wie sich die Modulation von flachen Sicherheitselementen auf das Beugungsbild auswirkt. Die dort offenbarten Gitterstrukturen, die auf Polarisationseffekten beruhen, können allerdings nicht auf totalreflektierende Retroreflektoren angewendet werden, weil totalreflektierende Würfeleckenretroreflektoren nicht polarisationserhaltend sind.

Aus der DE 10 2005 061 749 A1 (Anmelderin: Giesecke & Devrient GmbH) sind Sicherheitselemente mit einer achromatisch reflektierenden Mikrostruktur in Form eines Mosaiks bekannt, wobei die Mosaikelemente auch Retroreflektoren sein können und eine laterale Abmessung aufweisen, die geringer ist als das Auflösungsvermögen des Auges und mit weiteren Sicherheitselementen versehen sein kann. In der EP 3 598 186 A1 (Anmelder: Hans Erich Gubela) sind Retroreflekotren gezeigt, bei denen in einer ausgewählten Anzahl an Tripeln erster Art Tripeln zweiter Art vorgesehen sind. Die WO 2020/074746 A1 (Anmelderin: Bundesdruckerei GmbH) offenbart ein Sicherheitselementmit einem in Reflexion beugenden Beugungselement, das eine Beugungsstruktur umfasst, für welche eine Beugungsgeometrie existiert, bei der eine Soll-Belichtungsrichtung des für die Beugung vorgesehenen Lichts mit einer Soll-Erfassungsrichtung, unter der das reflektierend gebeugte Licht erfassbar ist, am Auftreffort des Beugungselements einen spitzen Winkel einschließt.Aus dem Bereich der Retroreflektoren für den Straßenverkehr können wichtige Definitionen übernommen werden:

Der Beobachtungswinkel $\alpha$ ist der Winkel zwischen den Geraden, die die Mittelpunkte einer anleuchtenden Lichtquelle und eines Empfängers mit dem Mittelpunkt einer Probe verbinden.

Als Anleuchtwinkel $\beta$ ist der Winkel zwischen der Verbindungsgeraden der Lichtquelle mit dem Mittelpunkt der beleuchteten Fläche und der Mittelsenkrechten der beleuchteten Fläche zu verstehen.

Der Verdrehwinkel $\varepsilon$ ist der Winkel um den die Probe um ihre Mittelsenkrechte von einer beliebig festgelegten Lage aus in Anleuchtungsrichtung gesehen im Uhrzeigersinn (+ ε) oder entgegengesetzt (- ε) gedreht wird.

Die Definitionen der Begriffe Anleuchtwinkel, Beobachtungswinkel und Verdrehwinkel sind der DIN 67520 Teil 1 09.82 entnommen. Insoweit wird diese Norm in die vorliegende Anmeldung einbezogen.

Der vorliegenden Erfindung liegt die Aufgabe zugrunde, ein Verfahren zur Ausrichtung eines retroreflektierenden Elements, das vor unerlaubter Nachahmung und Abformung zu schützen ist und mit einem unter einem Anleuchtwinkel > 30° sichtbaren Sicherheitsmerkmal versehen ist, und das gleichzeitig möglichst wenig Reflektionsleistung in den retroreflektierenden Strukturen bei Anleuchtwinkel < 10° verliert, bereitzustellen.

Diese Aufgabe wird durch ein Verfahren nach Anspruch 1 gelöst.

Das erfindungsgemäße retroreflektierende Element kann beispielsweise ein Retroreflektor oder eine retroreflektierende Folie sein. Es umfasst eine regelmäßige Anordnung mehrerer reflektierender Tripel mit jeweils drei Seitenflächen die zueinander näherungsweise senkrecht stehen. Das heißt, sie bilden zueinander einen Winkel zwischen 88° und 92° bevorzugt zwischen 89° 50' und 90° 10'. Mindestens ein ausgewählter Tripel in der Anordnung des erfindungsgemäßen retroreflektierenden Elements weist auf mindestens einer ersten Seitenfläche ein Sicherheitselement auf. Selbstverständlich kann das Sicherheitselement auch auf weiteren Seitenflächen des ausgewählten Tripels oder auf weiteren ersten Seitenflächen anderer Tripel angebracht sein. Das Sicherheitselement kann auch in einem regelmäßigen Muster angebracht sein. Ausgewählte Tripel mit dem Sicherheitselement können selbst wiederum einen Schriftzug bilden.

Ein Sicherheitselement ist ein Element, das zur Echtheitsprüfung dient. Die Echtheitsprüfung kann mit maschinellen Mitteln oder durch einen visuellen oder haptischen Eindruck erfolgen. Das Sicherheitselement dient dazu, unerlaubte Abformungen erkennbar zu machen. Das erfindungsgemäße Sicherheitselement weist diffraktive Strukturen wie ein einfaches Beugungsgitter oder ein Hologramm auf. Diffraktive Strukturen sind Strukturen, die auf dem Prinzip der Beugung beruhen.

Eine Modulationstiefe des erfindungsgemäßen Sicherheitselements ist so gewählt, dass das Sicherheitselement bei Beleuchtung des Retroreflektors unter einem Anleuchtwinkel < 10° nicht wahrnehmbar ist. Unter Modulationstiefe ist dabei die Amplitude der Gittermodulation zu verstehen. Die Modulationstiefe berechnet sich aus dem maximalen Höhenunterschied zwischen Peak und Tal innerhalb einer Gitterlinie des optischen Gitters, bzw. dem maximalen Höhenunterschished zwischen Peak und Tal eines Hologramms. Je geringer die Modulationstiefe ist, desto geringer ist der Gangunterschied bzw. der Phasenunterschied, der durch den Weg des Lichts in der Tiefe also entlang eines Normalenvektors der ersten Seitenfläche hervorgerufen wird, und desto weniger intensiv ist das Beugungsbild des Sicherheitselements unter kleinen Anleuchtwinkeln. Unter großen Anleuchtwinkeln überwiegt der Effekt des Gitterabstands senkrecht zum Normalenvektor der ersten Seitenfläche und die Gitterstruktur wird sichtbar. Die Modulationstiefe der optischen Strukturen wird erfindungsgemäß möglichst gering gewählt. Bei einem Linienabstand der Gitterlinien von 1,5 μm hat sich eine Modulationstiefe von ca. 20 - 30 nm als geeignet herausgestellt. Durch eine solche Struktur ist das Sicherheitsmerkmal erkennbar, wenn man unter großen Anleuchtwinkel beleuchtet. In einem Normalbetrieb, z.B. in Sensoren, Lichtschranken oder Displays ist das Sicherheitsmerkmal unsichtbar.

Damit das Sicherheitsmerkmal im Normalbetrieb unsichtbar bleibt, ist es besonders vorteilhaft, wenn eine Beugungseffizienz der diffraktiven Strukturen geringer als 7% ist. Als Beugungseffizienz ist der Quotient der Energie zu verstehen, die in ein Beugungsmaximum erster Ordnung im Verhältnis zum Beugungsmaximum nullter Ordnung fließt.

Damit das Sicherheitsmerkmal durch seine Farbreflektionen bei großen Anleuchtwinkeln mit dem Auge erkennbar ist, sind Linienabstände der diffraktiven Strukturen in der Größenordnung von maximal 3 mal der gewünschten Wellenlänge des sichtbaren Lichts vorteilhaft, insbesondere Linienabstände zwischen 500 nm und 2,0 μm. Besonders vorteilhaft sind Linienabstände zwischen 1,4 μm und 1,6 μm. Falls mehrere Tripel Sicherheitselemente aufweisen, ist es vorteilhaft, die Linienabstände der Sicherheitselemente benachbarter Tripel leicht zu variieren, damit trotz einer unterschiedlichen Anleuchtung bezogen auf den einzelnen Tripel ein optisch gleichmäßiger Gesamteindruck entsteht. Mit anderen Worten, der Linienabstand eines zweiten Sicherheitselements ist um einen Faktor zwischen 1,01 und 2 mal größer als der Linienabstand des ersten Sicherheitselements. Bevorzugt ist das zweite Sicherheitselement weiter von einer Lichtquelle bzw. einem Sender in bevorzugter Anleuchtrichtung entfernt als das erste Sicherheitselement. Der genaue Faktor der unterschiedlichen Linienabstände hängt vom Winkelunterschied zur Lichtquelle ab und muss individuell berechnet werden. Für eine maschinelle Erkennung können auch andere Gitterabstände gewählt werden, die dann beispielsweise Wellenlängen außerhalb des sichtbaren Spektrums geeignet beugen. Die Modulationstiefe sollte zwischen 0,1 % und 10 % des Linienabstands, bevorzugt zwischen 1 % und 2 % des Linienabstands betragen.

Bei kleinen Strukturen, also bei Strukturen mit Schlüsselweiten der Tripel zwischen 50 μm und 500 μm, die schwierig herzustellen sind, ist eine Markierung mit einem erfindungsgemäßen Sicherheitselement besonders interessant. Als Schlüsselweite ist der Abstand zwischen zwei parallelen Kanten des Sechseckes in der Projektion auf die Lichteintrittsfläche definiert. Ein Anwendungsbereich von solchen Strukturen sind beispielsweise Displays, bei denen ein Betrachter bei der normalen Nutzung das Sicherheitsmerkmal nicht erkennen soll oder flexible Retroreflektorfolien, bei denen kleine Schlüsselweiten zu einer besseren Flexibilität der Folie führen.

Je nach gewünschtem visuellem Effekt kann der Anteil der Fläche, die das Sicherheitselement auf der ersten Seitenfläche des mit dem Sicherheitselement versehenen Tripels bedeckt, frei gewählt werden. Wenn auch unter großen Anstrahlwinkeln möglichst wenig Licht in die Beugung gehen soll, kann die bedeckte Fläche zwischen 5 % und 50 % betragen. Wenn das Sicherheitselement möglichst schnell gefunden werden soll ist es sinnvoll zwischen 50 und 98 % der ersten Seitenfläche mit dem Sicherheitselement zu bedecken.

Gemäß einer vorteilhaften Ausführungsform der Erfindung weist der ausgewählte Tripel (3) auf jeder der drei Seitenflächen (5, 7, 9, 35) ein Sicherheitselement (11) auf. Hierbei unterscheidet sich die Modulationstiefe des Sicherheitselements (11) der ersten Seitenfläche (5) von der Modulationstiefe des Sicherheitselements der zweiten Seitenfläche (7). Beide Modulationstiefen unterscheiden sich wiederum von der Modulationstiefe des Sicherheitselements der dritten Seitenfläche (9). Dadurch kann aus unterschiedlichen Blickrichtungen ein unterschiedlicher Helligkeitseindruck erzeugt werden, wodurch eine Orientierung des erfindungsgemäßen retroreflektierenden Elements erleichtert wird.

Der erfindungsgemäße Retroreflektor kann einfach ausgerichtet werden. Insbesondere bei runden Retroreflektoren besteht bisher das Problem, dass die Lichtleistung von der Orientierung abhängig ist und entweder eine sichtbare Markierung auf einer Lichteintrittsfläche zur Kennzeichnung einer Vorzugsrichtung angebracht werden muss oder die Strukturen wie in dem Gebrauchsmuster DE 20 2019 001 143 U1 (Inhaberin: Imos Gubela GmbH Anmeldetag 11.3.2019) vorgeschlagen in verschiedene Bereiche angeordnet werden müssen, was durch das Zerschneiden einzelner Tripel ebenfalls zu Verlusten führt. Mit einem erfindungsgemäßen Retroreflektor ist eine einfache Ausrichtung des Reflektors möglich.

Die Ausrichtung erfolgt in folgenden Schritten: Zunächst wird ein erfindungsgemäßes retroreflektierendes Element bereitgestellt. Das retroreflektierende Element wird unter einem vorgegebenen Anleuchtwinkel angestrahlt, beispielsweise unter einem Anleuchtwinkel zwischen 30° und 45° und unter einem vorgegebenen Beobachtungswinkel analysiert. Die Positionen eines Senders und eines Empfängers sind also vorher definiert. Der Empfänger kann sich beispielsweise in einem Gehäuse mit dem Sender, benachbart zu diesem angeordnet, befinden. Dies entspricht einem kleinen Beobachtungswinkel von ca. 0° bis 2°. Der Empfänger kann auch in einer Achse zur Mittelsenkrechten des retroreflektierenden Elements angeordnet sein. In diesem Fall ist der Beobachtungswinkel gleich dem Anleuchtwinkel.

In einem weiteren Schritt wird das erfindungsgemäße retroreflektierende Element schrittweise rotiert.

D.h., der Verdrehwinkel ε wird beispielsweise in 5°-Schritten geändert. Anschließend nimmt der Empfänger, beispielsweise eine CCD-Kamera, einen Farbwert auf. Der Farbwert ist der Absolutwert des Vektors zu einem Farbort. Eine Auswerteeinheit, beispielsweise ein Computer mit entsprechender Grafiksoftware gleicht den empfangenen Farbwert mit einem Sollwert ab. Anschließend kann noch eine Feinjustage mit geringerer Schrittweite, beispielsweise einer Schrittweite von 0,5° durchgeführt werden.

Die Herstellung des erfindungsgemäßen retroreflektierenden Elements erfolgt vorzugsweise durch Abformung eines Masters. Der Master als Formwerkzeug ist ein negativ des erfindungsgemäßen retroreflektieren Elements. Das Formwerkzeug hat also auch eine regelmäßige Anordnung von Tripeln mit jeweils drei Seitenflächen die zueinander einen Winkel zwischen 88° und 92° bevorzugt zwischen 89° 50' und 90° 10' bilden und besonders bevorzugt senkrecht aufeinander stehen. Tiefpunkte im Formwerkzeug werden Hochpunkte im retroreflektierenden Element. Das gleiche gilt für das Sicherheitselement und dessen diffraktiven Strukturen. Aufgrund von Ungenauigkeiten bei Abformung und Schrumpfungsprozesse des verwendeten Kunststoffs sollte die Modulationstiefe ca. 1,01 mal die gewünschte Modulationstiefe im retroreflektierenden Element betragen.

Für große Stückzahlen hat sich das Spritzgussverfahren bewährt. Für Prototypen kann auch auf andere Abformverfahren wie Heißprägen zurückgegriffen werden, wenn eine höhere Abformgenauigkeit erforderlich ist. Für die Herstellung von retroreflektierenden Folien kann auf Imprintverfahren, wie Rolle-zu-Rolle-Imprintverfahren mit UV-härtenden Polymeren zurückgegriffen werden. Bei all diesen Abformverfahren muss das Sicherheitselement vorher auf den Master aufgebracht werden. Dies kann mittels der üblichen Methoden der Lithographie wie der Fotolithographie mit Masken und anschließender Ätzung geschehen. Durch die Ätzdauer kann die Modulationstiefe beeinflusst werden. Billiger sind jedoch Methoden mittels Laserinterferenzablation. Dabei werden Strahlen eines UV-Ultrakurzpulslasers (zum Beispiel einer Wellenlänge von 197 nm) mit einem Gitterinterferometer so zur Interferenz gebracht, dass sich eine stehende Welle ausbildet. An den Stellen der konstruktiven Interferenz wird am Master Material abgetragen. Die Modulationstiefe der Struktur erhöht sich mit der Intensität der verwendeten Strahlung.

Wird das erfindungsgemäße retroreflektierende Element oder das Formwerkzeug erneut, beispielsweise mit galvanischen Verfahren abgeformt, bleibt das Sicherheitselement in schwächerer Ausprägung erhalten. Durch einen Vergleich der Intensitäten unter Anleuchtwinkeln > 30° kann eine unerlaubte Nachahmung, die unter Verwendung eines im Umlauf befindlichen retroreflektierenden Elements oder eines Formwerkzeugs entdeckt werden.

Die nachfolgenden Figuren sollen die Erfindung, ohne die Allgemeinheit der Offenbarung einzuschränken, näher erläutern. Es zeigen:

Figur 1 ein erfindungsgemäßes retroreflektierendes Element von einer Lichteintrittsseite aus betrachtet
Figur 2 das retroreflektierende Element aus Figur 1 aus einer weiteren Perspektive
Figur 3 symbolisch einen einzelnen Tripel mit erfindungsgemäßem Sicherheitselement
Figur 4 ein weiteres Beispiel eines diffraktiven Gitters
Figur 5 ein Beispiel eines erfindungsgemäßen Retroreflektors im Vergleich mit verschiedenen Beschriftungen gemäß Stand der Technik.

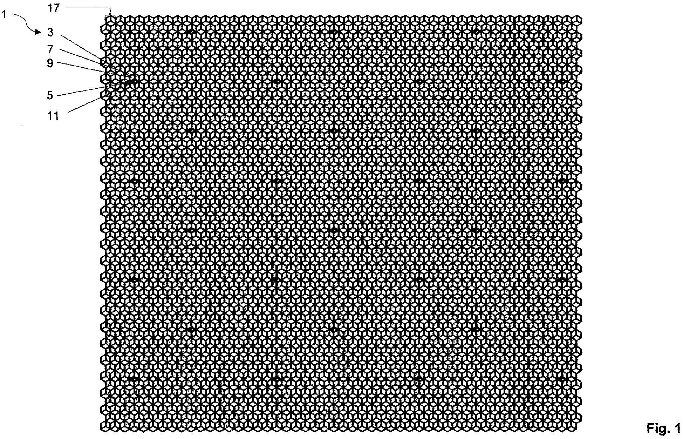

In **Fig. 1** ist ein erfindungsgemäßes retroreflektierendes Element 1 von einer Lichteintrittsseite aus betrachtet dargestellt. Das retroreflektierende Element 1 besteht aus einer regelmäßigen Anordnung von Tripeln 3. Jeder Tripel 3 hat in dieser Ansicht die Form eines Hexagons. Jeder Tripel 3 hat eine erste Seitenfläche 5, eine zweite Seitenfläche 7 und eine dritte Seitenfläche 9, die jeweils senkrecht aufeinander stehen. Auf der ersten Seitenfläche 5 von in regelmäßigem Abstand ausgewählten Tripeln 3 ist ein Sicherheitselement 11 angeordnet. Die Schlüsselweite 17 ist der Abstand zwischen parallelen Kanten des Hexagons.

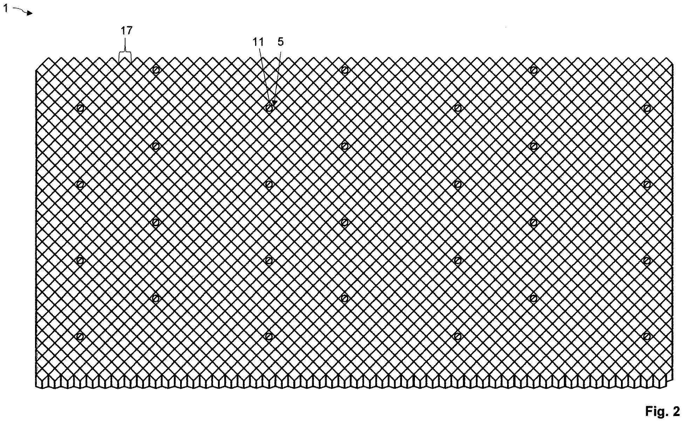

**Fig. 2** zeigt das retroreflektierende Element 1 aus der Perspektive der Draufsicht auf die ersten Seitenflächen 5 mit der regelmäßigen Anordnung von Sicherheitselementen 11. In dieser Perspektive entspricht die Schlüsselweite 17 der Diagonalen einer einzelnen ersten Seitenfläche 5.

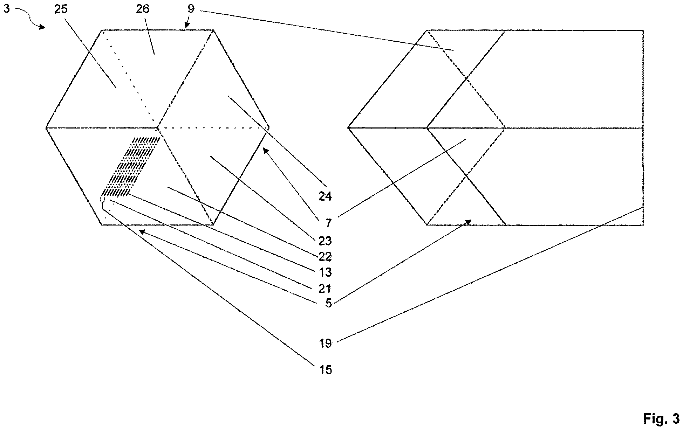

**Fig. 3** zeigt symbolisch einen einzelnen Tripel 3 eines erfindungsgemäßen Retroreflektors. Anhand dieser Figur soll der komplexe Lichtweg durch ein erfindungsgemäßes retroreflektierendes Element beispielhaft erläutert werden. Die Gitterlinien des Beugungsgitters als diffraktive Struktur 13 mit dem Linienabstand 15 (hier symbolisch dargestellt) verlaufen parallel zu einer Mitteldiagonalen der Fläche 5. Beispielsweise aus der EP 1 894 043 B1 (Inhaberin: Imos Gubela GmbH) ist bekannt, dass Licht sechs verschiedene Wege durch einen einzelnen Tripel 3 nehmen kann, da bei drei Seitenflächen 5, 7, 9 sechs verschiedene Permutationen der Reihenfolge möglich sind. In der sechseckigen Projektion auf eine Lichteintrittsfläche 19 entspricht jedem der möglichen Wege eine Teilfläche 21, 22, 23, 24, 25, 26. Für Licht, das durch das Sicherheitselement in die nullte Ordnung gebeugt wird, spielt die Reihenfolge, in der die Seitenflächen 5, 7, 9 durchlaufen werden, keine Rolle, da sich die nullte Ordnung wie ein Spiegel verhält. Bei höheren Beugungsordnungen folgt die Gesamtablenkung des reflektierten Strahls zur nullten Ordnung dem Beugungsgesetz:

$$d = g \cdot ( \sin \varphi - \sin \varphi_i ) = n * \lambda$$

mit d als Gangunterschied g als Gitterabstand, $\varphi$ als Beugungswinkel senkrecht zur Flächennormalen des Beugungsgitters, $\varphi i$ als Einfallsrichtung senkrecht zur Flächennormalen des Beugungsgitters, n als Beugungsordnung, und $\lambda$ als der Wellenlänge der elektromagnetischen Strahlung.

Der Einfallswinkel $\varphi_i$ auf die diffraktive Struktur 13 hängt sowohl vom Anleuchtwinkel als auch von der Reihenfolge der angestrahlten Teilflächen ab. Für Licht, das zuerst auf die Seitenfläche 5 mit der diffraktiven Struktur 13 fällt ist der Einfallswinkel gleich dem Neigungswinkel der Seitenfläche 5 zur Lichteintrittsfläche 19 plus (vektoriell gerechnet) dem nach dem Brechungsgesetz an der Lichteintrittsfläche modifizierten Anleuchtwinkel. Der Beugungswinkel $\varphi$ wirkt für den weiteren Weg durch den Retroreflektor über die Seitenflächen 7 und 9 wie ein sehr großer Winkelfehler der Seitenfläche 5, sodass die in der Literatur üblichen Näherungen kleiner Winkelfehler nicht mehr greifen, sofern die Seitenflächen 7 und 9 überhaupt noch getroffen werden und der Strahl nicht als Irrstrahl verloren geht. Andererseits wirkt bei diesem Strahlengang die diffraktive Struktur 13 auch bei so großen Anleuchtwinkeln, dass normalerweise eine Totalreflektion der Seitenfläche 5 verloren gegangen wäre. Dann können Beugungsstrahlen höherer Ordnung trotzdem die Seitenflächen 7 und 9 treffen und von diesen reflektiert werden.

Auch ein Strahl, der die erste Seitenfläche 5 als zweite Reflexfläche nach einer Reflektion an der Teilfläche 25 der dritten Seitenfläche 9 oder der Teilfläche 23 der zweiten Seitenfläche 7 trifft, weist nach der Beugung einen großen Winkelfehler auf und erschwert so die Nachverfolgung.

Lediglich Licht, das auf die Teilflächen 24 und 26 zuerst auftrifft und von diesen reflektiert wird, trifft dann als letztes auf die Seitenfläche 5 mit der diffraktiven Struktur 13. Hier ist der Austrittswinkel des retroreflektierten Strahls ungefähr der Anleuchtwinkel, vektoriell addiert mit dem Beugungswinkel, der durch das diffraktive Gitter 13 verursacht wird.

Durch die Erörterung des Lichtwegs wird gezeigt, warum es erwünscht ist, höhere Beugungsordnungen bei kleinen Anleuchtwinkeln möglichst zu unterdrücken. Allerdings können die größeren Anleuchtwinkel bei vorgegebener Ausrichtung eines Senders und eines Empfängers und bei vorgegebenem Verdrehwinkel ($\varepsilon$) gezielt zu einer Codierung benutzt werden.

Da die Lichtwege wie gezeigt sehr komplex sind, muss für das oben beschriebene Justageverfahren und für die Vorrichtung zur Detektion des im Sicherheitselement des retroreflektierenden Elements codierten Signals der Sollwert einer Farbverteilung mittels einer Raytracingsoftware ermittelt werden oder in einer experimentell ermittelten Tabelle abgelesen werden.

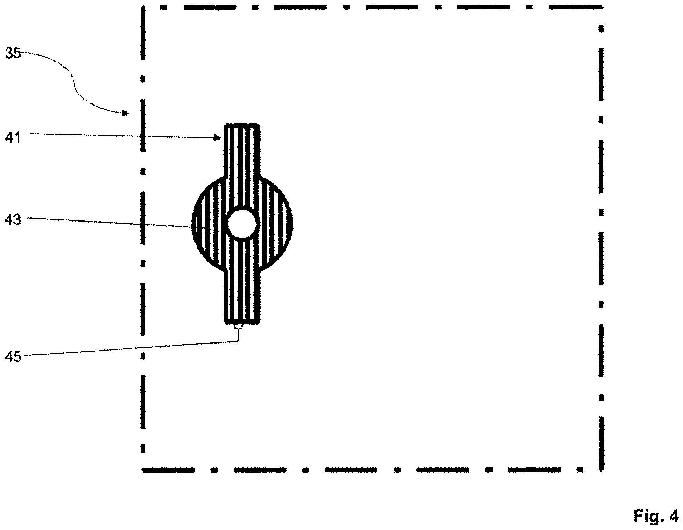

**Fig. 4** zeigt ein weiteres Beispiel eines Sicherheitselements 41 mit einem diffraktiven Gitter 43 auf einer ersten Seitenfläche 35 eines erfindungsgemäßen Retroreflektors in einer anderen Ausführungsform. Auch hier ist der Linienabstand 45 nur vergrößert symbolisch angedeutet und nicht als Maßangabe zu verstehen. Die einzelnen Gitterlinien des Beugungsgitter verlaufen parallel zu einer Seitenkante der Fläche. Im Vergleich zu dem Gitter gemäß Figur 3 sind die Gitterlinien also um 45° gedreht. Der Verlauf der Gitterlinien verleiht der Seitenfläche 35 eine Vorzugsrichtung, sodass Lichteinfall senkrecht dazu eher gebeugt wird als Lichteinfall parallel dazu.

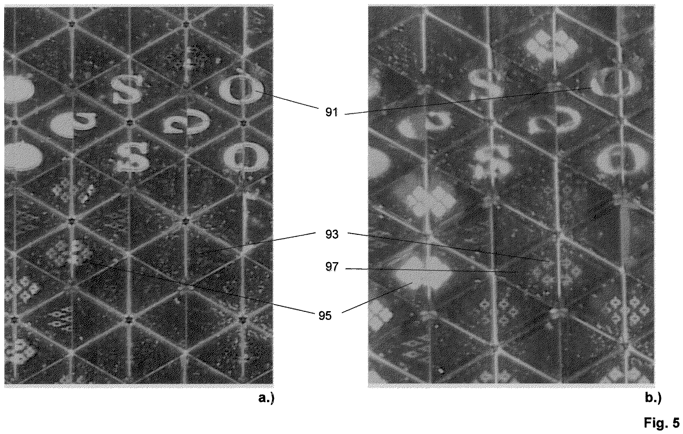

**Fig. 5** zeigt ein Beispiel eines erfindungsgemäßen Retroreflektors im Vergleich mit verschiedenen Beschriftungen gemäß Stand der Technik. Figur 5 a zeigt eine Mikroskopaufnahme des Retroreflektors bei Auflicht, d.h., unter einem Anleuchtwinkel von 0°. Figur 5 b zeigt den gleichen Ausschnitt des Retroreflektors unter einer Ausleuchtung unter einem Winkel von ca. 45° von schräg links oben. Konventionell ablatierte Buchstaben 91 absorbieren eingestrahltes Licht und vermindern so die Reflektionsleistung des Reflektors. Das erfindungsgemäße Sicherheitsmerkmal 93 ist bei Beleuchtung unter Auflicht unsichtbar und durch die hauptsächliche Beugung in die nullte Ordnung verhält sich das Sicherheitsmerkmal 93 optisch wie die es umgebende Reflektionsfläche 97. Sobald die Lichtquelle verschoben wird und unter Anleuchtwinkeln größer 30° beleuchtet wird, erscheint das Sicherheitsmerkmal in einem vom Anleuchtwinkel abhängigen Farbspektrum. Eine konventionelle diffraktive Struktur 95 ist auch unter Auflicht sichtbar, d.h. es wird Reflektionsleistung in ein Beugungsmaximum mindestens erster Ordnung gegeben und die Gitterstruktur fällt auch bei Verwendung für Sensorapplikationen sofort auf.

Bezugszeichenliste:

| 1 | retroreflektierendes Element |
|---|---|
| 3 | Tripel |
| 5, 35 | erste Seitenfläche |
| 7 | zweite Seitenfläche |
| 9 | dritte Seitenfläche |
| 11, 41 | Sicherheitselement |
| 13, 43 | diffraktive Struktur |
| 15, 45 | Linienabstand |
| 17 | Schlüsselweite |
| 19 | Lichteintrittsfläche |
| 21, 22, 23, 24, 25, 26 | Teilfläche |
| 91 | ablatierte Buchstaben |
| 93 | Sicherheitsmerkmal |
| 95 | sichtbare diffraktive Struktur |

**Patentansprüche**

1. Verfahren zur Ausrichtung eines retroreflektierenden Elements (1) umfassend eine regelmäßige Anordnung mehrerer reflektierender Tripel (3) mit jeweils drei Seitenflächen (5, 7, 9, 35) die zueinander einen Winkel zwischen 88° und 92° bevorzugt zwischen 89° 50' und 90° 10' bilden und besonders bevorzugt senkrecht aufeinander stehen,

   wobei mindestens ein ausgewählter Tripel (3) in der Anordnung auf mindestens einer ersten Seitenfläche (5, 35) ein Sicherheitselement (11, 41) mit mindestens einer diffraktiven Struktur (13, 43) aufweist,
   und wobei eine Modulationstiefe des Sicherheitselements (11, 41) so gewählt ist, dass das Sicherheitselement bei Beleuchtung des retroreflektierenden Elements (1) unter einem Anleuchtwinkel < 10° nicht wahrnehmbar ist **gekennzeichnet durch** folgende Schritte:

      i. Bereitstellung des retroreflektierenden Elements
      ii. Beleuchtung des retroreflektierenden Elements unter einem vorgegebenen Anleuchtwinkel und Beobachtung und Auswertung des empfangenen Signals unter einem vorgegebenen Beobachtungswinkel
      iii. Schrittweise Veränderung eines Verdrehwinkels ε
      iv. Vergleich eines empfangenen Farbwerts des Sicherheitselements (11, 41) mit einem vordefinierten Farbwert
      v. Wiederholung der Schritte iii und iv bis der empfangene Farbwert mit dem vordefinierten Farbwert innerhalb einer Toleranz übereinstimmt.

2. Verfahren gemäß Anspruch 1, **dadurch gekennzeichnet, dass** der Anleuchtwinkel zwischen 30° und 60°, vorzugsweise 45° beträgt.

3. Verfahren gemäß Anspruch 1 oder 2, **dadurch gekennzeichnet, dass** der Beobachtungswinkel gleich dem Anleuchtwinkel ±1° ist.

4. Verfahren gemäß Anspruch 1 oder 2, **dadurch gekennzeichnet, dass** der Beobachtungswinkel < 1° ist.

**Claims**

1. Method for aligning a retroreflective element (1) comprising a regular arrangement of several reflective triples (3) each having three side surfaces (5, 7, 9, 35) which form an angle between 88° and 92°, preferably between 89° 50' and 90° 10', and particularly preferably are perpendicular to one another, wherein at least one selected triple (3) in the arrangement has a security element (11, 41) with at least one diffractive structure (13, 43) on at least one first side surface (5, 35),

and wherein a modulation depth of the security element (11, 41) is selected such that the security element is not perceptible when the retroreflective element (1) is illuminated at an illumination angle of < 10°, **characterized by** the following steps:

i. providing the retroreflective element;
ii. illuminating the retroreflective element at a predetermined illumination angle, and observing and evaluating a received signal at a predetermined observation angle;
iii. changing a rotation angle ε in increments ;
iv. comparing a received color value of the first security element with a predefined color value, wherein the color value is an absolute value of a vector to a color location;
v. repeating steps iii and iv until the received color value agrees within a tolerance with the predefined color value.

**2.** Method according to claim 1, **characterized in that** the illumination angle is between 30° and 60°, preferably 45°.

**3.** Method according to claim 1 or 2, **characterized in that** the observation angle is equal to the illumination angle ±1°.

**4.** Method according to claim 1 or 2, **characterized in that** the observation angle is < 1°.

**Revendications**

**1.** Procédé pour l'orientation d'un élément rétroréfléchissant (1), comprenant un agencement régulier de plusieurs trièdres réfléchissants (3) comportant chacun trois surfaces latérales (5, 7, 9, 35) qui forment mutuellement un angle compris entre 88° et 92°, de préférence entre 89° 50' et 90° 10' et qui de façon particulièrement préférentielle sont superposés verticalement, sachant qu'au moins un trièdre (3) sélectionné dans l'agencement présente sur au moins une surface latérale (5, 35) un élément de sécurité (11, 41) présentant au moins une structure diffractive (13, 43), et sachant qu'une profondeur de modulation de l'élément de sécurité (11, 41) est sélectionnée de telle manière que l'élément de sécurité n'est pas perceptible lorsque l'élément rétroréfléchissant (1) est illuminé selon un angle d'illumination < 10°, **caractérisé par** les étapes suivantes :

i. Mise à disposition de l'élément rétroréfléchissant
ii. Illumination de l'élément rétroréfléchissant selon un angle d'illumination spécifié, puis observation et analyse du signal reçu selon un angle d'observation spécifié iii. Modification pas à pas d'un angle de torsion ε
iv. Comparaison d'une valeur chromatique reçue de l'élément de sécurité (11, 41) avec une valeur chromatique prédéfinie
v. Répétition des étapes iii et iv jusqu'à ce que la valeur chromatique reçue concorde, à l'intérieur d'une fourchette tolérantielle, avec la valeur chromatique définie.

**2.** Procédé selon la revendication 1, **caractérisé en ce que** l'angle d'illumination est compris entre 30° et 60°, et qu'il est de préférence de 45°.

**3.** Procédé selon la revendication 1 ou 2, **caractérisé en ce que** l'angle d'observation est égal à ± 1° près à l'angle d'illumination.

**4.** Procédé selon la revendication 1 ou 2, **caractérisé en ce que** l'angle d'observation est < 1°.

Fig. 1

Fig. 2

**Fig. 3**

35

41

43

45

**Fig. 4**

a.)

b.)

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3810804 A
- DE 4236779 A1
- DE 102018112043 A1
- DE 10312708 B4
- DE 102012105571 A1
- DE 102009012300 A1
- DE 102005061749 A1
- EP 3598186 A1
- WO 2020074746 A1
- DE 202019001143 U1
- EP 1894043 B1

**In der Beschreibung aufgeführte Nicht-Patentliteratur**

- **RAJIB AHMED ; ALI K YETISEN ; SEOK HYUN YUN ; HAIDER BUTT.** Color-selective holographic retroreflector array for sensing applications. *Light: Science & Applications,* 05. September 2016